# NEUE EUROPÄISCHE PATENTSCHRIFT

(11) **EP 1 057 052 B2**
(45) Veröffentlichungstag und Bekanntmachung des Hinweises auf die Entscheidung über den Einspruch: **21.07.2010**
(45) Hinweis auf die Patenterteilung: 21.01.2004
(21) Anmeldenummer: 99900426.0
(22) Anmeldetag: 21.01.1999
(51) Int. Cl.: G02B 5/28

(54) **VERFAHREN ZUR HERSTELLUNG EINER STRUKTUR VON INTERFERENZ-FARBFILTERN**
METHOD FOR PRODUCING A STRUCTURE OF INTERFERENCE COLOUR FILTERS
PROCEDE DE PRODUCTION D'UNE STRUCTURE DE FILTRES COLORES D'INTERFERENCE

(30) Priorität: 20.02.1998 CH 41798
(43) Veröffentlichungstag der Anmeldung: 06.12.2000
(60) Teilanmeldung: 04000793.2
(73) Patentinhaber: Unaxis Trading AG, 9477 Trübbach (CH)
(72) Erfinder: EDLINGER, Johannes, A-6820 Frastanz (AT); SPERGER, Reinhard, A-6800 Feldkirch (AT); SIMOTTI, Maria, CH-7323 Wangs (CH)
(74) Vertreter: Troesch Scheidegger Werner AG
(86) Internationale Anmeldenummer: PCT/CH1999/000026
(87) Internationale Veröffentlichungsnummer: WO 1999/042864

(56) Entgegenhaltungen:
- GB-A- 2 288 053
- US-A- 3 771 857
- US-A- 3 914 464
- US-A- 3 996 461
- US-A- 4 155 627
- US-A- 5 246 803
- US-A- 5 423 970
- 'Thin Solid Films 270', 1995, ELSEVIER SCIENCES S.A. Artikel J.D. BARRIE, K.A. AITCHISON, G.S. ROSSANO, M.H. ABRAHAM: 'Patterning of multilayer dielectric optical coatings for multispectral CCDs', Seite 6-9
- 'Lexikon Elektronik und Mikroelektronik', 1993, VDI-VERLAG GMBH, DÜSSELDORF, ISBN 318401178-X Seite 780,781,
- 'IBM J.RES.DEVELOP', Mai 1977 Artikel F.H. DILL, J.M. SHAW: 'Thermal Effects on the Photoresist AZ135OJ', Seite 210-218
- Bd. 2253 1994 Artikel A. ZÖLLER ET AL: 'Plasma ion assisted deposition: A novel technique for the production of optical coatings', Seite 394-402
- Bd. 3221 1997 Artikel THOMAS A. MOONEY: 'Focal plane filter microassemblies: A status report', Seite 568-580

## Beschreibung

Die vorliegende Erfindung betrifft ein Verfahren zur Herstellung einer Farbfilterschichtsystem-Struktur auf einer Unterlage nach dem Oberbegriff von Anspruch 1.

Eine solche Technik ist als Lift-Off-Technik bekannt. Sie ist relativ kostengünstig, weil dabei relativ wenig Prozessschritte in Vakuumatmosphäre durchzuführen sind. Diese Technik ist beispielsweise aus der US-A-3 914 464 bekannt:

Als Lift-Off-Maske wird ein Fotolack bzw. eine Metallschicht mit einer vorgegebenen Dicke von beispielsweise 4 bis 6 µm abgeschieden und darüber ein dielektrisches Interferenz-Farbfilterschichtsystem nur der halben Dicke. Vor Abscheiden des Farbfilter-Schichtsystems wird der Lift-Off-Lack während langer Zeit, über 8 Stunden bei 200°C, in Vakuumatmosphäre gehärtet. Der Lift-Off-Lack bzw. dessen strukturierte Flächen werden nach Abscheiden des Farbfilterschichtsystems mit heissem Xylol im eigentlichen Lift-Off-Schritt entfernt.

Es ist augenfällig, dass die Lift-Off-Lackschichtstruktur aufwendig behandelt wird, und zwar so, dass, als Abscheideverfahren für das Farbfilterschichtsystem, Aufdampfen überhaupt eingesetzt werden kann. Um nämlich eine genügende Qualität der abgeschiedenen Systemschichten sicherzustellen, muss eine Aufdampftemperatur von über 200°C eingehalten werden. Die darunterliegende Lackschicht muss mithin ohne Veränderung diesen Temperaturen standhalten.

Es ist im weiteren aus der Literatur, z.B. aus H.A. MACLEOD, "Thin-Film Optical Filters" 2nd edition, Adam Hilger Ltd., 1986, Seiten 357 bis 405, bekannt, dass bei tieferen Temperaturen aufgedampfte optische Schichten spektral nicht stabil sind. Ihre spektralen Eigenschaften verändern sich mit der Umgebungstemperatur und der Luftfeuchtigkeit, wobei insbesondere die Cut-on- und Cut-off-Kanten der spektralen Charakteristik spektral verschoben werden. Will man spektral stabile Schichten, die eine genügende Qualität aufweisen, abscheiden, so muss die Aufdampftemperatur sehr hoch gewählt werden, was dazu führt, dass der darunterliegende Lack polymerisiert und der nachmalige Lift-Off-Prozess äusserst erschwert wird. Versucht man hingegen die Temperatur des Aufdampfprozesses niedrig zu halten, so erkauft man sich dies, wie erwähnt, durch starke Temperatur- und Luftfeuchtigkeits-abhängige spektrale Verschiebungen der erwähnten Kanten.

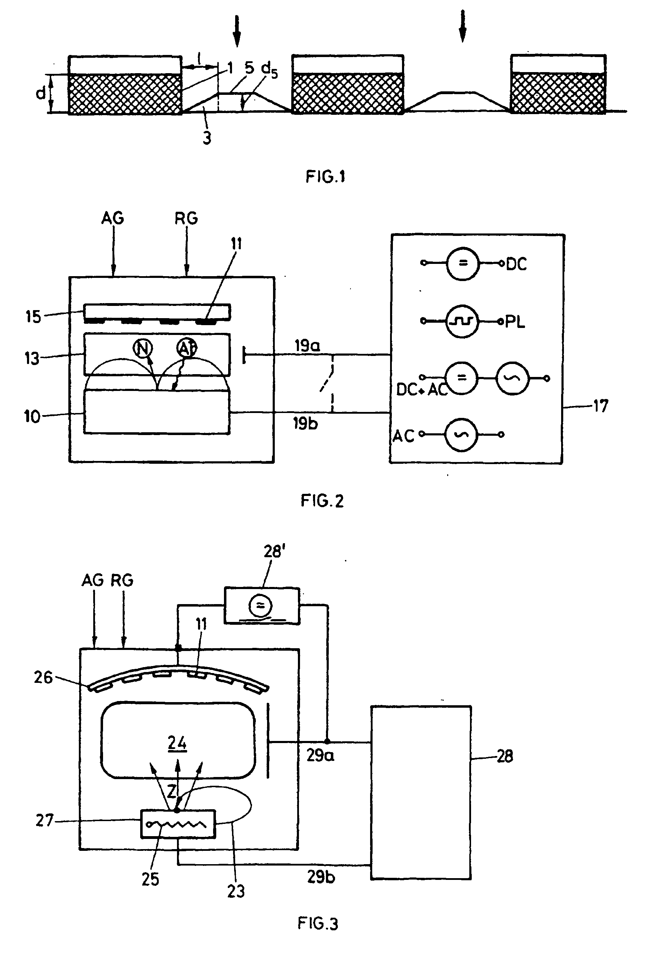

Im weiteren ist das in obgenannter Schrift vorgeschlagene lange Ausheizen des Lackes in Vakuum äusserst kostenaufwendig und reduziert die Ausstossrate von Herstellungsanlagen für derartige Strukturen wesentlich. Weiter ist der Einsatz von heissem Xylol zur Auflösung des zwingend relativ hohen Temperaturen standhaltenden Lackes, mit Blick auf die Cancerogenität von Xylol, höchst bedenklich. Weil weiter, aufgrund des Aufbringverfahrens des Farbfilterschichtsystems bei Temperaturen weit über 200°C, eine diese Temperaturen standhaltende Lackschicht vorgesehen werden muss, müssen für die nachmalige Entfernung des Lacks grosse Angriffsflächen für das Lösungsmittel bereitgestellt werden. Deshalb muss die Lackschichtdicke wesentlich höher gewählt werden als die Dicke der darüber abzulegenden Farbfilterschichtsysteme. Dies ergibt grosse gestörte Zonen: Wird, anschliessend an die Belackung und die Strukturierung der Lackschicht, in Lack- und lackfreie Bereiche ein Farbfilter-Teilsystem abgeschieden, so ergeben sich, wie in Fig. 1 dargestellt ist, wegen der Abschattung durch die Kanten der Lackbereiche 1, in den Randbereichen 3 der Farbfilterstruktur, gestörte Zonen, in denen die Farbfilterstruktur-Dicke kleiner ist als in ungestörten Bereichen 5. Je grösser die Lackdicke d ist, desto grösser werden die gestörten Farbfilterstruktur-Bereiche.

Zudem ist es bekannt, dass Substratgläser bei den für das Aufdampfen der erwähnten Farbfilterschichtsysteme notwendigen Temperaturen schrumpfen, d.h. ihre Form ändern. Dies führt dazu, dass das nebeneinander erfolgende Abscheiden von Farbfilterschichtsystemen mit unterschiedlichen Spektren, wie beispielsweise für Rot, Gelb und Blau, geometrisch nicht exakt erfolgen kann, was zu Unschärfen zwischen Filterbereichen unterschiedlicher Spektralbereiche führt.

Weiter versprödet das Glassubstrat bei den erwähnten hohen Temperaturen, insbesondere unter Berücksichtigung der thermischen Wechselbeanspruchung, beispielsweise beim Hintereinander-Abscheiden von mehreren Farbfilterschichtsystemen in Lift-Off-Technik. Dies führt zur Beeinträchtigung der Bruchfestigkeit der hergestellten Strukturen und damit auch zur Erhöhung des Ausfalls.

Eine weitere Alternative wäre es, einen Lack zu verwenden, der den hohen geforderten Aufdampftemperaturen standhält, also Temperaturen im Bereiche von 300°C. Solche Lacke sind jedoch teuer und schwierig zu verarbeiten.

Weiter könnte man Liftoffmasken aus Metall, z.B. aus Al oder Cr einsetzen. Da ihr Aufbringen jedoch üblicherweise wieder einen Vakuumbeschichtungsschritt erfordert, wäre auch dies zu teuer.

In der US 5 246 803 wird darauf eingegangen, dass es bekannt gewesen sei, das eingangs erwähnte Verfahren durch Sputtern zu realisieren, wobei, um den dabei entstehenden Temperaturen zu widerstehen, ein Doppelmetal-Liftoffverfahren eingesetzt worden sei, unter Verwendung von Aluminium und Chrom. Im Weiteren ist daraus ein Verfahren eingangs genannter Art bekannt, bei welchem mittels Verdampfungstechnik eine Beschichtung bei weniger als 150°C erreicht wird.

Aus der US 3 996 461 ist es bekannt, nicht strukturierte Schichtsysteme abzulegen.

Im Dokument "Plasma ion assisted deposition" (Zöller et al. in SPIE Vol. 2253 S. 394 ff) wird eine Anlage zur Herstellung von Farbfilterschichtsystem durch plasmaunterstütztes Bedampfen mit niedriger thermischer Belastung der Substrate beschrieben.

Das Dokument "Patterning of multilayer dielectrical optical coatings for multispectral CCDs" (Barrie et al., Thin Solid Films 270 (1995) 6-9) beschreibt die Herstellung von optischen Sensoren mittels Lift-Off-Technik. RF Magnetron Sputtern wird angewendet um Farbfilterschichtsysteme abzulegen.

Es ist Aufgabe der vorliegenden Erfindung, ein verbessertes Verfahren eingangs genannter Art zu schaffen.

Dadurch wird es möglich, den Lift-Off-Lack beim Abscheiden der Filterschichtsysteme weiterhin wenig thermisch zu beanspruchen, d.h. weit unterhalb der Polymerisationstemperatur beispielsweise konventioneller Fotolacke. Durch das vorgeschlagene plasmaunterstütze Abscheideverfahren, bei dem das Substrat einer hohen Ionenbeschussdichte ausgesetzt ist, nämlich Magnetron-Sputtern oder plasmaunterstütztes Bedampfen, entstehen darüber hinaus Filter mit dichten Schichten und mit temperatur- und feuchtigkeitsstabilen Spektraleigenschaften. Weil der Lack thermisch wenig beansprucht wird, kann seine notwendige thermische Widerstandsfähigkeit massgeblich reduziert bleiben, was seinerseits dazu führt, dass eine wesentlich kürzere Lackbehandlung und wesentlich reduzierte Lackschichtdicken erforderlich bleiben, was wiederum die Ausdehnung der gestörten Bereiche 3 nach Fig. 1 reduziert. Darüber hinaus können konventionelle Fotolacke eingesetzt werden und mittels üblicher Lösungsmittel, wie mittels Aceton oder NMP (N-Methyl-2-Pyrrolidon) für den Lift-Off gelöst werden.

Das Verfahren gemäss vorliegender Erfindung
- sichert mithin weiterhin wesentlich reduzierte Beschichtungstemperaturen, was zur Reduktion der notwendigen Lackdicke und zur Verwendbarkeit üblicher kostengünstiger Lacke führt. Die sich weiter ergebende Lackdickenreduktion führt direkt zur Reduktion der Ausdehnung der Störbereiche gemäss Fig. 1.
- Durch Magnetron-Sputtern oder plasmaunterstütztes Bedampfen wird eine Bombardierung der Substrate mit einem Ionenstrom hoher Dichte realisiert, womit dichte, optisch stabile Filterschichten realisiert werden.
- Die Ausdehnung der durch Abschattung bewirkten Störstellen kann durch zusätzliche Richtmassnahmen, wie Vorsehen von Kolliminatoren oder durch elektrostatische Ausrichtung der Ionenbewegung, reduziert werden. Es werden auch möglichst niedrige Drücke in der Beschichtungskammer eingesetzt, mit entsprechend grosser mittlerer freien Weglänge.

Wird, ohne Vorsehen zusätzlicher Richtmassnahmen, Magnetron-Sputtern eingesetzt, so ergeben sich, gemäss Fig. 1, gestörte Bereiche 3 mit einer Ausdehnung von ca. 5 * d, mit mehr gerichteten plasmaunterstützten Verfahren bis hinab zu ca. 1 * d. Dies bei den erfindungsgemäss bereits an sich geringen Werten für d.

Ein mehr gerichtetes Beschichtungsverfahren als Sputtern ist plasmaunterstütztes Bedampfen, bei welchem, wie bekannt, Material aus einem Verdampfungstiegel in die Prozessatmosphäre thermisch verdampft wird, beispielsweise durch Elektronenstrahlverdampfen, wobei in der Atmosphäre ein Plasma unterhalten wird. Damit wird das Problem der Abschattung noch weitergehender behoben, und es wird möglich, auch Farbfilterschichtsystemstrukturen mit sehr kleinen Ausdehnungen beherrscht und mit hoher Effizienz abzuscheiden.

Das vorgeschlagene Verfahren eignet sich insbesondere für die Farbfilterstrukturierung für LCD-Projektoren und CCD-Sensoren.

Nachfolgend wird die Erfindung anhand von Figuren beispielsweise erläutert.

Diese zeigen:
- Fig. 1:: eine schematische Darstellung eines belackten, strukturierten und beschichteten Substrates zur Erläuterung der Entstehung gestörter Bereiche,
- Fig. 2:: schematisch eine für die Durchführung des erfindungsgemässen Verfahrens geeignete Sputterbeschichtungsanlage in schematischer Form,
- Fig. 3:: eine zur Durchführung des erfindungsgemässen Verfahrens geeignete Anlage zum plasmaunterstützten thermischen Aufdampfen, wiederum schematisch dargestellt,
- Fig. 4:: schematisch eine auf einem Substrat abgelegte Lackstruktur und deren Abrundung der nachfolgenden Beschichtung und
- Fig. 5:: in Darstellung analog zu Fig. 4 das Vorsehen einer Zwischenschicht zwischen Lackstruktur und nachfolgend abgeschiedener Filterschicht zur Vermeidung der anhand von Fig. 4 erläuterten Verrundung der Kanten des Photolacks.

In Fig. 2 ist eine erste Ausführungsvariante einer Anlage für erfindungsgemäss eingesetztes Magnetron-Sputtern schematisch dargestellt. Über einer Magnetron-Sputterquelle 10 mit dem Target abzusputternden Materials wird ein Plasma 13 unterhalten. Ionen eines zugeführten Arbeitsgases AG, wie beispielsweise Ar, schlagen durch Impulsübertragung überwiegend neutrale Targetmaterial-Partikel N aus dem Target, welche sich auf dem Werkstück 15 niederlegen. Wie schematisch an der Speiseeinheit 17 dargestellt, kann das Plasma über der Sputterquelle DC- oder mittels einer gepulsten Gleichspannung PL oder grundsätzlich mittels überlagertem DC- und AC- oder mit AC-, insbesondere mit RF-, Leistung betrieben werden. Aufgrund der im vorliegenden Fall interessierenden Abscheidung dielektrischer Schichten an üblicherweise nichtleitenden Werkstücksubstraten 15 wird insbesondere auf die Möglichkeit verwiesen, das Plasma mittels einer Gleichspannung zu betreiben, jedoch die plasmaerzeugenden Elektroden, in Fig. 2 schematisch bei 19a und 19b dargestellt, und wie daran gestrichelt angedeutet, in vorgegebenen Zeitabschnitten, vorzugsweise periodisch, niederohmig zu verbinden. Bezüglich der plasmaunterstützten Beschichtung nichtleitender Substrate mit dielektrischen Schichten und unter Einsatz von DC-Plasmen bzw. von Substrat-Bias kann verwiesen werden auf:
- EP-508 359 bzw.
   US-5 423 970;
- EP-564 789 bzw. die US-Anmeldungen US SN 08/300865
   US SN 08/641707.

Die Schichten der Farbfilterschichtsysteme werden jeweils entweder nicht-reaktiv, also ausschliesslich unter Verwendung des Arbeitsgases AG und/oder durch einen reaktiven Sputterprozess und Verwendung eines Reaktivgases RG, wie von O₂ erzeugt, z.B. je nachdem, welche Schichtmaterialien eingesetzt werden. Dabei werden Temperaturen der beschichteten, mit dem Lift-Off-Lack 11 versehenen Werkstücke 15 von höchstens 150°C, vorzugsweise von höchstens 100°C, eingehalten.

Aufgrund der hohen Ionenbeschussdichte werden dichte Schichten realisiert, die ihre spektralen Eigenschaften, bei wechselnder Umgebungstemperatur und Luftfeuchtigkeit, kaum mehr ändern.

Ohne weitere Richtmassnahmen, wie Vorsehen von Kollimatoren, eignet sich das Sputterbeschichten für Anwendungen, bei denen gestörte Bereiche 3 gemäss Fig. 1 mit einer Ausdehnung von ca. 5 * d in Kauf genommen werden können.

In Fig. 3 ist, in Darstellungsweise analog zu Fig. 1, ein zweites erfindungsgemäss eingesetztes Verfahren schematisch dargestellt, nämlich plasmaunterstütztes bzw. ionenunterstütztes Verdampfen. Hierbei wird z.B. mittels eines Elektronenstrahls 23 und/oder einer Heizung 25 Material aus einem Tiegel 27 verdampft. Wiederum wird mit einer Speisequelle 28, welche, was die ausgegebenen Signale angelangt, analog zu der anhand von Fig. 2 erläuterten Quelle 17 aufgebaut sein kann, ein dichtes Plasma 24 oberhalb des Tiegels 27 unterhalten. Die Werkstücke sind hier vorzugsweise an einer drehgetriebenen Träger-Kalotte 26 angebracht, deren Kugelzentrum das Zentrum Z der Verdampfungsquelle 27 ist. Wiederum werden Temperaturen von höchstens 150°C eingehalten, insbesondere von höchstens 100°C. Dieses gerichtete Verfahren ermöglicht es, Lift-Off-Lackstrukturen 11 mit Filterschichtsystemen zu beschichten, welche gestörte Bereiche 3 gemäss Fig. 1 erfordern, deren Ausdehnung ca. 1 * d und weniger beträgt.

Auch beim plasmaunterstützten bzw. ionenunterstützten Verdampfen gemäss Fig. 3 wird je nach aufzubauender Schicht des Farbfilterschichtsystems nicht-reaktiv unter ausschliesslicher Verwendung des Arbeitsgases AG, oder reaktiv unter Verwendung eines Reaktivgases RG gearbeitet.

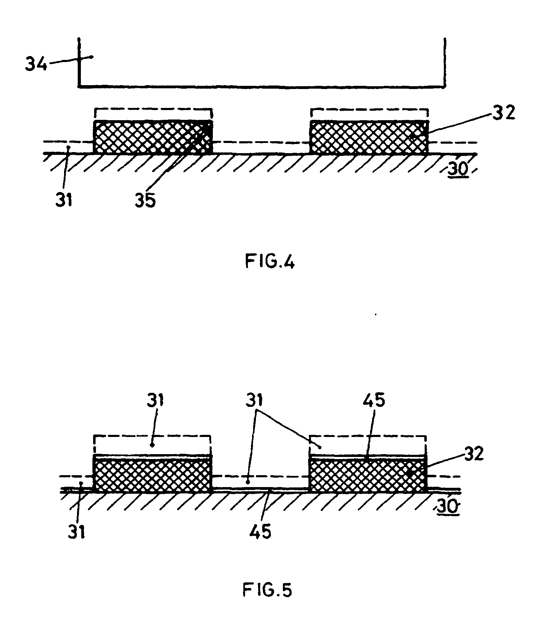

In Fig. 4 ist, vergrössert, auf dem Substrat 30 die Lift-Off-Lackstruktur 32 dargestellt. Darüber ist schematisch das Plasma 34 des plasmaunterstützten Abscheideverfahrens dargestellt. Soll die erste Schicht 31 des Farbfilterschichtsystems, in Fig. 4 gestrichelt dargestellt, durch einen reaktiven Prozess abgelegt werden, wie insbesondere unter Verwendung ionisierten Sauerstoffes, so wird die Lift-Off-Lackstruktur, wie bei 35 schematisch angedeutet, insbesondere in den Kantenbereichen durch angeregtes Reaktivgas, wie erwähnt insbesondere O₂ oder durch im Plasma aktiviertes und/oder gespaltenes H₂O aus dem Restgas angegriffen.

Gemäss vorliegender Erfindung wird die erste Schicht des Farbfilterschichtsystems nicht-reaktiv abzulegen, also mit Blick auf Fig. 2 bzw. Fig. 3 unter ausschliesslicher Verwendung des Arbeitsgases Ar. Hierzu wird das Schichtmaterial entweder direkt als Target- bzw. Verdampfungsquellen-Material eingesetzt.

Eine nicht beanspruchte Möglichkeit besteht gemäss Fig. 5 darin, vor dem Aufbringen der ersten Schicht 31 des Farbfilterschichtsystems, eine optisch breitbandig und weitgehendst verlustlos transmittierende, d.h. optisch neutrale, gut haftende Zwischenschicht auf die Lift-Off-Lackstruktur aufzubringen, die, als Schutzschicht, dem nachfolgenden Prozess standhält. Die in Fig. 5 dargestellte Zwischenschicht 45 mit einer Dicke von 5 bis 10 nm besteht bevorzugterweise aus SiO oder SiO₂, welches durch angeregtes ionisiertes Reaktivgas, insbesondere O₂ bzw. H₂O aus dem Restgas, chemisch nicht angegriffen wird. In Fig. 5 bezeichnet die gestrichelt eingetragene Schicht 31 die nachmals aufgebrachte erste optisch aktive Schicht des Farbfilterschichtsystems, die nun durch einen reaktiven Prozess abgelegt werden kann. Im weiteren kann die Zwischenschicht 45 auch aus SiO₂ bestehen, das nicht- oder nur schwach reaktiv abgeschieden wird. Eine SiO₂-Zwischenschicht bildet dann die erste, niedrigerbrechende Schicht des Filterschichtsystems mit folgenden, höherbrechenden Schichten.

Durch das erfindungsgemässe Vorgehen wird es möglich, Pixelstrukturen, wie insbesondere für LCD-Lightvalve-Projektoren und CCD-Sensoren, kostengünstig und mit geringer Ausschussquote herzustellen, die darüber hinaus gegenüber Umweltsveränderungen, insbesondere Temperatur- und Feuchtigkeitsänderungen, spektral höchst stabil sind. Insbesondere unter Einsatz der erwähnten Zwischenschicht wird zudem eine äusserst gute Haftung der Farbfiltersysteme auf dem Substrat erreicht. Die notwendigen Lift-Off-Lackschichten können wesentlich dünner als das Doppelte der darüber abgelegten Farbfilterschichtsysteme sein. Das Vorsehen überhängender Seitenwände der Lackbereiche, wie bei der Aluminisierung in der Halbleiter-Herstellung üblich, ist überflüssig.

Weil das Aufbringen der Farbfilterschichtsysteme bei tiefen Temperaturen erfolgt und mithin die darunterliegenden Lift-Off-Lackstrukturen entsprechend geringen Temperaturbelastungen ausgesetzt sind - mithin nur wenig temperaturresistent sein müssen - ergibt sich eine höchst vereinfachte Lift-Off-Technik, ohne dass heisse und höchst agressive Lösungsmittel oder Ultraschall für den Lift-Off eingesetzt werden müsste.

Die bevorzugte Verwendung der erwähnten Zwischenschicht vermeidet die negative Beeinflussung des reaktiven Abscheidens der ersten Filterschicht auf dem Lift-Off-Lack, insbesondere die Kantenschädigung der Lackstrukturen durch reaktive Ar-O₂-H₂O-Plasmen.

## Patentansprüche

1. Verfahren zur Herstellung einer Farbfilterschichtsytem-Struktur auf einer Unterlage (30), bei dem, in Lift-Off-Technik, eine strukturierte Lackschicht (32) auf der Unterlage (30) abgelegt wird, mit Lackschichtflächenbereichen und lackschichtfreien Bereichen, dann durch ein Vakuumbeschichtungsverfahren ein Farbfilterschichtsystem (31) abgelegt wird und danach, mit den Lackschichtflächenbereichen, die darauf abgelegten Bereiche des Farbfilterschichtsystems (31) entfernt werden, wobei das Vakuumbeschichtungsverfahren bei einer Temperatur von höchstens 150°C erfolgt, **dadurch gekennzeichnet, dass** das Ablegen des Farbfilterschichtsystems (31) durch ein plasmaunterstütztes Beschichten erfolgt, nämlich durch Magnetronsputtern oder plasmaunterstütztes Bedampfen und die erste Schicht des Farbfilterschichtsystems (31) nicht-reaktiv unter ausschliesslicher Verwendung eines Arbeitsgases auf der strukturierten Lackschicht (32) abgelegt wird.

2. Verfahren nach Anspruch 1, **dadurch gekennzeichnet, dass** das Bedampfungs-Ablegen unterstützt durch eine Niederspannungsbogenentladung erfolgt.

3. Verfahren nach einem der Ansprüche 1 oder 2, **dadurch gekennzeichnet, dass** das Ablegen des Farbfilterschichtsystems (31) bei einer Temperatur von höchstens 100°C erfolgt.

4. Verfahren nach einem der Ansprüche 1 bis 3, **dadurch gekennzeichnet, dass** die Plasmaerzeugung mittels DC oder AC, insbesondere RF oder einer pulsierenden Gleichspannung oder mittels überlagertem AC und DC erfolgt (17).

5. Verfahren nach einem der Ansprüche 1 bis 4, **dadurch gekennzeichnet, dass** das Ablegen der ersten Schicht des Farbfilterschichtsystems in einer Edelgas- Atmosphäre erfolgt.

6. Verfahren nach einem der Ansprüche 1 bis 5, **dadurch gekennzeichnet, dass** das Farbfilterschichtsystem Schichten mit höherem und Schichten mit tieferem Brechungsindex umfasst.

7. Verfahren nach einem der Ansprüche 1 bis 6, **dadurch gekennzeichnet, dass** das Ablegen der Schichten mit bevorzugter Schichtmaterial-Auftreffrichtung senkrecht zur Unterlage erfolgt.

8. Verwendung des Verfahrens nach einem der Ansprüche 1 bis 7 für die Herstellung von Farbfiltern für LCD-Lightvalve-Projektoren oder für die Farbgebung für CCD-Sensoren.

## Claims

1. Process for production of a colour filter layer system structure on a substrate (30) in which, in lift-off technique, a structured paint layer (32) is deposited on the substrate (30) with paint layer surface zones and paint layer-free zones, then by a vacuum coating process a colour filter layer system (31) is deposited and thereafter, with the paint layer surface zones, the areas of the colour filter layer system (31) deposited thereon are removed, the vacuum coating process taking place at a temperature of maximum 150°C, **characterised in that** the colour filter layer system (31) is deposited by a plasma-supported coating process, namely by magnetron sputtering or plasma-supported vapour deposition, and **in that** the first layer of the color filter layer system (31) is nonreactively deposited on the structured paint layer (32) with the exclusive use of a working gas.

2. Process according to claim 1, **characterised in that** the vapour deposition takes place with the support of a low voltage arc discharge.

3. Process according to one of claims 1 or 2, **characterised in that** the colour filter layer system (31) is deposited at a temperature of maximum 100°C.

4. Process according to any of claims 1 to 3, **characterised in that** the plasma is generated by means of DC or AC, in particular RF or a pulsating direct current voltage or by means of overlaid AC and DC (17).

5. Process according to any of claims 1 to 4, **characterised in that** the first layer of the colour filter layer system is deposited in an atmosphere containing an inert gas.

6. Process according to any of claims 1 to 5, **characterised in that** the colour filter layer system comprises layers with higher and layers with lower refractive index.

7. Process according to any of claims 1 to 6, **characterised in that** the layers are deposited with preferred contact direction of the layer material vertical to the substrate.

8. Use of the process according to any of claims 1 to 7 for the production of colour filters for LCD light valve projectors or for coloration for CCD sensors.

## Revendications

1. Procédé pour fabriquer une structure stratifiée formant filtre coloré sur un substrat (30), selon lequel selon la technique de l'enlèvement, une couche de laque structurée (32) est déposée sur le substrat (30), avec des zones superficielles pourvues d'une couche de laque et des zones sans couche de laque, puis un système stratifié formant filtre coloré (31) est déposé sous vide, et avec les zones pourvues d'une couche de laque, les zones dudit système stratifié (31) déposées sur celles-ci sont enlevées, l'application de revêtement sous vide se faisant à une température maximale de 150°C, **caractérisé en ce que** le dépôt du système stratifié formant filtre coloré (31) se fait par dépôt avec utilisation d'un plasma, à savoir par pulvérisation cathodique par magnétron ou par évaporation avec utilisation d'un plasma, et en déposer la première couche du système stratifié formant filtre coloré (31) sur la couche de laque structurée (32) de manière non réactive en utilisant uniquement un gaz de travail.

2. Procédé selon la revendication 1, **caractérisé en ce que** le dépôt par évaporation est renforcé par une décharge en arc basse tension.

3. Procédé selon la revendication 1 ou 2, **caractérisé en ce que** le dépôt du système stratifié formant filtre coloré (31) se fait à une température maximale de 100°C.

4. Procédé selon l'une des revendications 1 à 3, **caractérisé en ce que** le plasma est produit à l'aide de courant continu ou de courant alternatif, en particulier par radiofréquence ou à l'aide d'une tension continue pulsée ou de courants continu et alternatif (17) superposés.

5. Procédé selon l'une des revendications 1 à 4, **caractérisé en ce que** le dépôt de la première couche du système stratifié formant filtre coloré se fait dans une atmosphère contenant un gaz rare.

6. Procédé selon l'une des revendications 1 à 5, **caractérisé en ce que** le système stratifié formant filtre coloré comprend des couches avec un indice de réfraction plus élevé et des couches avec un indice de réfraction plus bas.

7. Procédé selon l'une des revendications 1 à 6, **caractérisé en ce que** le dépôt des couches se fait avec un sens d'incidence du matériau de couche de préférence perpendiculaire au substrat.

8. Utilisation du procédé selon l'une des revendications 1 à 7 pour fabriquer des filtres colorés pour des projecteurs à modulateur de lumière à affichage à cristaux liquides ou pour colorer des capteurs CCD.
